# EUROPÄISCHE PATENTSCHRIFT

(11) **EP 1 016 312 B1**
(45) Veröffentlichungstag und Bekanntmachung des Hinweises auf die Patenterteilung: **20.08.2003**
(21) Anmeldenummer: 98954123.0
(22) Anmeldetag: 07.09.1998
(51) Int. Cl.: H04Q 11/04, H04M 3/42

(54) **VERFAHREN UND ANORDNUNG FÜR EINE AUTOMATISCHE ÜBERSETZUNG VON NACHRICHTEN IN EINEM KOMMUNIKATIONSSYSTEM**
METHOD AND DEVICE FOR AUTOMATIC TRANSLATION OF MESSAGES IN A COMMUNICATIONS SYSTEM
PROCEDE ET DISPOSITIF POUR LA TRADUCTION AUTOMATIQUE DE MESSAGES DANS UN SYSTEME DE COMMUNICATION

(30) Priorität: 19.09.1997 DE 19741475
(43) Veröffentlichungstag der Anmeldung: 05.07.2000
(73) Patentinhaber: SIEMENS AKTIENGESELLSCHAFT, 80333 München (DE)
(72) Erfinder: HECKER, Hans-Dieter, D-81475 München (DE)
(86) Internationale Anmeldenummer: DE9802624
(87) Internationale Veröffentlichungsnummer: WO99016257

(56) Entgegenhaltungen:
- EP-A- 0 311 416
- EP-A- 0 585 480
- EP-A- 0 601 710
- WO-A-95/20859

## Beschreibung

Aus der Produktschrift der Fa. Siemens "ISDN im Büro", Sonderausgabe telecom report und Siemens-Magazin COM, ISBN 3-8009-3849-9, insbesondere der Seiten 58 bis 66, ist ein privates Kommunikationssystem bekannt, das neben vermittlungsbezogenen Funktionen zusätzliche Funktionen zur Verfügung stellt. Solche zusätzlichen Funktionen werden im allgemeinen als Leistungsmerkmale bezeichnet, wobei hierbei insbesondere für den Kommunikationsdienst "Sprache" eine große Zahl unterschiedlicher Leistungsmerkmale bekannt sind.

Mit der zunehmenden Internationalisierung des Fernsprechverkehrs nimmt die Anzahl der Verbindungen zwischen Fernsprechteilnehmern mit unterschiedlichen Landessprachen zu. Im Zuge dieser Entwicklung sind bereits Bemühungen bekannt, die Verständigung zwischen Fernsprechteilnehmern, die nicht der selben Landessprache mächtig sind, durch Zwischenschaltung einer Übersetzungseinrichtung zu erleichtern.

Aus der EP 0 585 480 A1 ist z.B. ein Verfahren bekannt, bei dem Übersetzungseinrichtungen zwischen jeweils zwei an einer Konferenzverbindung beteiligten Teilnehmerendgeräten eingeschleift werden. Für ein Einschleifen einer Übersetzungseinrichtung ist eine Eingabe von zusätzlichen Informationen in ein oder in mehrere an der Konferenzverbindung beteiligten Teilnehmerendgeräten notwendig.

Die Eingabe der Informationen, die das Einschleifen der Übersetzungseinrichtungen auslösen, erfolgt dabei nach Aufforderung entweder durch die Wahl einer Rufnummer am jeweiligen Teilnehmerendgerät oder durch Sprachproben in der Landessprache, in welcher der jeweilige Konferenzteilnehmer das folgende Gespräch im Rahmen der Konferenzverbindung führen, d.h. sprechen und hören will.

Der vorliegenden Erfindung liegt die Aufgabe zugrunde, ein Verfahren und eine Anordung anzugeben, welche einen höheren Komfort bei einer Verbindung zwischen Teilnehmern unterschiedlicher Landessprache vermittelt.

Die Lösung dieser Aufgabe erfolgt erfindungsgemäß mit den Merkmalen des Patentanspruchs 1 bzw. 8.

Ein wesentlicher Vorteil des erfindungsgemäßen Verfahrens besteht darin, daß ein Teilnehmer ohne zusätzliche Eingabe von Informationen in seiner Landessprache kommunizieren kann.

Vorteilhafte Weiterbildungen der Erfindung sind in den Unteransprüchen angegeben.

Ein Ausführungsbeispiel der Erfindung wird im folgenden anhand der Zeichnung weiter erläutert.

Dabei zeigen:
- Fig 1:: ein Strukturbild zur schematischen Darstellung eines Kommunikationssystems zur Durchführung des erfindungsgemäßen Verfahrens
- Fig 2:: ein Strukturbild zur schematischen Darstellung der im Rahmen eines Verbindungsaufbaus zwischen Teilnehmern beteiligten Funktionseinheiten

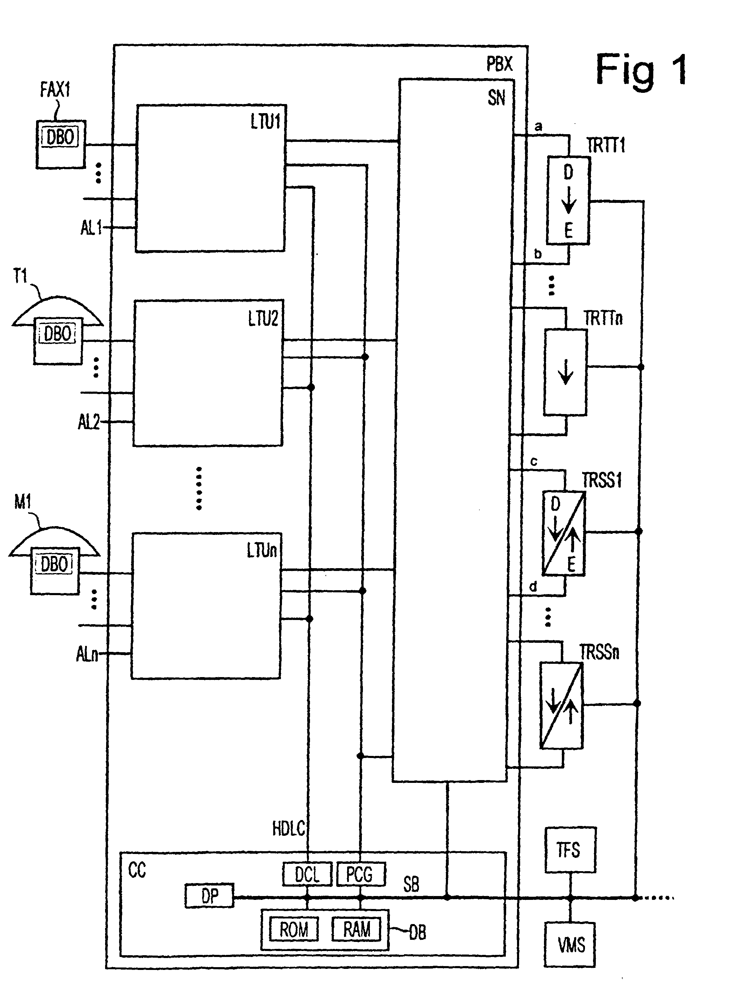

In Fig 1 sind wesentliche Funktionselemente eines Kommunikationssystems anhand eines Strukturbildes dargestellt. Das dargestellte Kommunikationssystem besteht aus einer Systemzentrale PBX mit einem Steuerwerk CC, das mit Anschlußeinheiten LTU1, LTU2, ... LTUn und einem Koppelnetz SN verbunden ist.

Die Anschlußeinheiten LTU1, LTU2, ... LTUn enthalten teilnehmerorientierte Geräteanschlüsse, wie beispielsweise ISDN-Basisanschlüsse für digitale mono- und multifunktionale Endgeräte, 1-Kanal-Anschlußmodule für Endgeräte, wie digitale Sprachendgeräte und Vermittlungsendgeräte sowie Teilnehmeranschlüsse für analoge Sprachendgeräte und Fax-Endgeräte. In der Figur sind beispielhaft ein internes Fax-Endgerät FAX1, sowie ein digitales Sprachendgeät T1 und ein multifunktionales Endgerät M1 dargestellt, die jeweils eine Dialog-Bedienoberfläche DBO aufweisen.

Die Anschlußeinheiten LTU1, LTU2, ... LTUn enthalten Leitungssatzschaltungen, die zur Verbindung mit öffentlichen und/oder privaten Netzen bzw. Sondereinrichtungen dienen. Dies sind beispielsweise ISDN-Basisanschlüsse für ISDN-Amtsverkehr (Amtsleitungen AL1, AL2, ... ALn) und ISDN-Querverkehr (2 Kanäle zu 64 kBit/s und ISDN-Signalisierung) sowie digitale Schnittstelleneinheiten (digital interface unit), d.h. Multiplexanschlüsse (30 Kanäle zu je 64 kBit/s) mit den Betriebsarten Amts- und Querverkehr mit ISDN-Signalisierung, Querverkehr mit kanalassoziierter Signalisierung.

Die Anschlußeinheiten LTU1, LTU2, ... LTUn sind mit dem Koppelnetz SN über beispielsweise vier Sprach-Daten-Multiplexkanäle verbunden. Der Meldungsaustausch zwischen den Anschlußeinheiten LTU1, LTU2,... LTUn und der Steuerung CC erfolgt über einen Signalisierungskanal, der in der Figur mit dem Bezugszeichen HDLC bezeichnet ist, im bekannten HDLC-Punkt-zu-Mehrpunkt-Verfahren.

Das Koppelnetz SN ist vorzugsweise modular aufgebaut und besteht beispielsweise aus einer blockierungsfreien Zeitstufe für 16-Sprach-Daten-Multiplexkanäle. Durch Zusammenschalten zweier derartiger Grundmodule entsteht eine Koppelstufe für 1024 Zeitlagen (32 Multiplexkanäle zu je 32 Kanälen). Neben 1-Kanal-Verbindungen können auch Breitbandverbindungen hergestellt werden.

Das Steuerwerk CC besteht aus einem Datenprozessor DP, einem Prozessor für Signalisierungssteuerung DCL, einem Taktgenerator PCG und einer Datenbasis DB. Die genannten Komponenten sind über einen Systembus SB, wie in der Figur dargestellt, miteinander verbunden. Die Datenbasis DB enthält einen Textspeicher ROM und einen Selektorspeicher RAM, wobei im Textspeicher ROM in mehreren Sprachen Anzeigetexte für eine Dialog-Bedienoberfläche DBO interner Endgeräte (FAX1, T1, M1) gespeichert sind. Durch das Drücken einer Sprachauswahltaste (nicht dargestellt) am Endgerät (FAX1, T1, M1) kann die Dialog-Bedienoberfläche DBO auf eine andere verfügbare Sprache umgeschaltet werden. Welche Sprache am Endgerät (FAX1, T1, M1) eingestellt ist, wird entweder temporär bis zum Ende des nächsten Gesprächs, oder statisch bis zur nächsten Sprachauswahl durch den Benutzer als Selektorinformation im Selektorspeicher RAM gespeichert.

Über den Systembus SB sind zu den bisher genannten Komponenten ein Sprachinformationsserver VMS und ein Text- und Faxserver TFS angeschlossen.

Der Sprachinformationsserver VMS bietet den angeschlossenen Teilnehmern die Möglichkeit, ihren Telefonanschluß auf persönliche "Sprach-Postfächer" umzuleiten. Die eingehenden Sprachinformationen werden in digitalisierter Form in den Postfächern gespeichert und bei der Ausgabe in natürlicher Sprache wiedergegeben.

Mittels des Text- und Faxservers TFS werden eingehende Text- oder Fax-Nachrichten in einem personenbezogenen Text- bzw. Fax-Postfach hinterlegt, die auf Abruf durch den Empfänger ausgegeben werden.

Über das Koppelnetz SN sind Sprachübersetzungseinrichtungen TRSS1,... TRSSn und Textübersetzungseinrichtungen TRTT1,... TRTTn an das Kommunikationssystem angeschlossen. Die Übersetzungseinrichtungen TRTT, TRSS sind wie in der Figur dargestellt zur Ansteuerung mit dem Systembus SB verbunden.

Die Sprachübersetzungseinrichtungen TRSS1,... TRSSn dienen zur Übersetzung einer gesprochenen Nachricht von einer Ausgangssprache in eine gewünschte Zielsprache und umgekehrt. Mittels der Sprachübersetzungseinrichtung TRSS1 läßt sich z.B. eine Übersetzung einer deutschsprachigen Nachricht in eine englischsprachige Nachricht und umgekehrt realisieren. Als Sprachübersetzungseinrichtungen TRSS1,... TRSSn werden beispielsweise Einrichtungen verwendet, wie sie in der europäischen Patentanmeldung mit der Veröffentlichungsnummer 585 480 verwendet werden.

Die Textübersetzungseinrichtungen TRTT1 ... TRTTn dienen zur Übersetzung eines in einer Ausgangssprache vorliegenden Textes in eine gewünschten Zielsprache. Mittels der Textübersetzungseinrichtung TRTT1 läßt sich z.B. eine Übersetzung eines deutschsprachigen Textes in einen englischsprachigen Text realisieren. Als Textübersetzungseinrichtungen TRTT1, ... TRTTn werden beispielsweise Einrichtungen verwendet, die in der europäischen Patentanmeldung mit der Veröffentlichungsnummer 357 370 beschrieben sind.

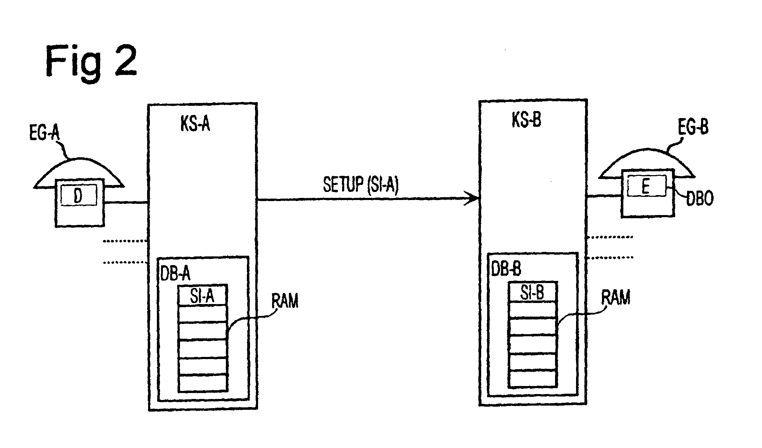

In Fig 2 ist in schematischer Weise zum einen ein Kommunikationssystem KS-A mit einem diesem zugeordneten rufenden Endgerät EG-A, und zum anderen ein Kommunikationssystem KS-B mit einem diesem zugeordneten gerufenen Endgerät EG-B, dargestellt. Zur Vereinfachung der Erläuterung geht man davon aus, daß beide Kommunikationssysteme KS-A, KS-B wie im Zusammenhang mit Fig 1 erläutert aufgebaut sind.

In einer Datenbasis DB-A des Kommunikationssystems KS-A sind in einem Selektorspeicher RAM Selektorinformationen SI hinterlegt, welche die für eine Display-Bedienoberfläche DBO interner Endgerätes EG eingestellte Landessprache, identifizieren. So ist z.B. für das dargestellte rufende Endgerät EG-A eine Selektorinformation SI-A im Selektorspeicher RAM hinterlegt.

In gleicher Weise sind in einer Datenbasis DB-B des Kommunikationssystems KS-B in einem Selektorspeicher RAM Selektorinformationen SI hinterlegt, welche die für eine Display-Bedienoberfläche DBO interner Endgerätes EG eingestellte Landessprache, identifizieren. So ist z.B. für das dargestellte gerufene Endgerät EG-B eine Selektorinformation SI-B im Selektorspeicher RAM hinterlegt. In der dargestellten Konfiguration ist z.B. für die Display-Bedienoberfläche DBO des rufenden Endgerätes EG-A die Landessprache Deutsch D, für die Display-Bedienoberfläche DBO des gerufenen Endgerätes EG-B die Landessprache Englisch E eingestellt.

Bei einem Verbindungsaufbau vom rufenden Endgerät EG-A zum gerufenen Endgerät EG-B werden im Rahmen einer Rufsignalisierungsmeldung SETUP, insbesondere im Rahmen einer ISDN-Rufsignalisierungsmeldung zusätzlich zu den herkömmlichen Teilnehmerdaten [z.B. Name des den Ruf veranlassenden Teilnehmers und Rufnummer der Teilnehmerstelle), die dem rufenden Endgerät zugeordnete Selektorinformation SI-A an das Kommunikationssystem KS-B übermittelt.

Im nachfolgenden wird teilweise auch auf Fig 1 Bezug genommen.

Das Kommunikationssystem KS-B identifiziert anhand der übermittelten Selektorinformation SI-A die Landessprache, die für das rufende Endgerät EG-A eingestellt ist - im folgenden als Quellsprache bezeichnet. Mittels der Selektorinformation SI-B identifiziert das Kommunikationssystem KS-B die Landessprache, die für das gerufene Endgerät EG-B eingestellt ist - im folgenden als Zielsprache bezeichnet. Unterscheiden sich die Selektorinformationen SI-A, SI-B, so wird die Verbindung automatisch über eine Übersetzungseinrichtung TRSS, TRTT geführt, die eine Übersetzung einer Nachricht von der Quellsprache in die Zielsprache realisiert.

Handelt es sich bei den Endgeräten EG-A, EG-B z.B. um digitale Sprachendgeräte zwischen denen eine Verbindung für die Übermittlung von gesprochenen Nachrichten existiert, so wird eine am Kommunikationssystem KS-B eingehende Nachricht über das Koppelnetz SN und die Leitung c an die Sprachübersetzungseinrichtung TRSS1 weitergeleitet, welche die eingehende Nachricht von der Quellsprache z.B. Deutsch in die Zielsprache z.B. Englisch übersetzt und die übersetzte Nachricht über die Leitung d und das Koppelnetz SN an das gerufene Endgerät EG-B übermittelt. Nachrichten die daraufhin vom gerufenen Endgerät EG-B an das rufende Endgerät EG-A übermittelt werden sollen, werden über das Koppelnetz SN und die Leitung d an die Sprachübersetzungseinrichtung TRSS1 weitergeleitet, welche die Nachricht von Englisch in Deutsch übersetzt und die übersetzte Nachricht über die Leitung c und das Koppelnetz SN an das rufende Endgerät EG-A übermittelt.

Ist das gerufene Endgerät EG-B zum Zeitpunkt des Verbindungsaufbaus nicht verfügbar, so wird eine gesprochene Nachricht zusammen mit der übermittelten Selektorinformation SI-A in einem persönlichen Sprach-Postfach gespeichert, aus dem die Nachricht auf Abruf durch den Empfänger ausgegeben wird. Die Nachricht wird über das Koppelnetz SN und die Leitung c an die Sprachübersetzungseinrichtung TRSS1 weitergeleitet, welche die Nachricht von der Quellsprache Deutsch in die Zielsprache Englisch übersetzt und die übersetzte Nachricht über die Leitung d und das Koppelnetz SN an das gerufene Endgerät EG-B übermittelt.

Handelt es sich bei den Endgeräten EG-A, EG-B z.B. um Fax-Endgeräte zwischen denen eine Datenverbindung für die Übermittlung von Fax-Nachrichten existiert, so werden die Textanteile einer am Kommunikationssystem KS-B eingehenden Fax-Nachricht mit Hilfe einer für sich bekannten Schrifterkennungseinrichtung (optical character reading) (nicht dargestellt) in ein Textformat in der Quellsprache konvertiert.

Anschließend wird die Nachricht über das Koppelnetz SN und die Leitung a an die Textübersetzungseinrichtung TRTT1 weitergeleitet, die den Text von der Quellsprache Deutsch in die Zielsprache Englisch übersetzt und die übersetzte Nachricht über die Leitung b und das Koppelnetz SN an das gerufene Endgerät EG-B übermittelt.

Ist das gerufene Endgerät EG-B zum Zeitpunkt des Verbindungsaufbaus nicht verfügbar, so wird die Fax-Nachricht zusammen mit der übermittelten Selektorinformation SI-A in einem persönlichen Fax-Postfach gespeichert. Bei Abruf durch den Empfänger wird die gespeicherte Nachricht wie beschrieben übersetzt und an das gerufene Endgerät EG-B übermittelt.

Handelt es sich bei den Endgeräten EG-A, EG-B z.B. um multifunktionale Endgeräte zwischen denen eine Datenverbindung für die Übermittlung von elektronischer Post (E-Mail) existiert, so wird die zu übersetzende Nachricht über das Koppelnetz SN und die Leitung a an die Textübersetzungseinrichtung TRTT1 weitergeleitet, welche die Nachricht von der Quellsprache Deutsch in die Zielsprache Englisch übersetzt und die übersetzte Nachricht über die Leitung b und das Koppelnetz SN an das gerufene Endgerät EG-B übermittelt. Ist das gerufene Endgerät EG-B zum Zeipunkt des Verbindungsaufbaus nicht verfügbar so wird eine eingehende Nachricht zusammen mit der übermittelten Selektorinformation SI-A in einem persönlichen Text-Postfach gespeichert. Bei Abruf durch den Empfänger wird die gespeicherte Nachricht wie bereits beschrieben durch die Textübersetzungseinrichtung TRTT1 übersetzt und an das gerufene Endgerät EG-B übermittelt.

Dem Benutzer wird die Option angeboten, die automatische Übersetzung zu deaktivieren. Hierzu wird bei einem Sprachendgerät für die Display-Bedienoberfläche DBO ein entsprechendes Menü angeboten, in welchem der Benutzer vor Aktivierung der Übersetzung die angebotene Übersetzung annehmen oder ablehnen kann. Für ein Bildschirmendgerät wird diese Option in die bei den verschiedenen Diensten (z.B. Fax-Dienst) verwendete Bildschirm-Oberfläche integriert.

Im Rahmen der Erfindung ist vorgesehen, daß die Übersetzung einer Nachricht nicht ausschließlich durch das Kommunikationssystem KS-B, dem das gerufene Endgerät EG-B zugeordnet ist, vorgenommen wird. Verfügt das Kommunikationssystem KS-B z.B. nicht über eine geeignete Übersetzungseinrichtung TRSS, TRTT, die eine Übersetzung einer Nachricht von der Quellsprache in eine gewünschte Zielsprache realisiert, oder ist die Übersetzungseinrichtung TRSS, TRTT nicht verfügbar, so kann die Übersetzung auch durch das Kommunikationssystem KS-A, dem das rufende Endgerät EG-A zugeordnet ist, vorgenommen werden.

Weiter ist es möglich, daß nur am Kommunikationssystem KS-B eingehende Rufe von der Quellsprache in die Zielsprache übersetzt werden. Nachrichten die vom gerufenen Endgerät EG-B an das rufende Endgerät EG-A übermittelt werden, werden dann durch das Kommunikationssystem KS-A, von der Zielsprache in die Quellsprache übersetzt.

Im Rahmen der Erfindung ist weiter vorgesehen, daß eine automatische Übersetzung einer Nachricht auch im Rahmen von Multimedia-Dienstübergängen, wie beispielsweise 'text-to-voice' oder 'voice-to-text' vorgenommen wird.

## Patentansprüche

1. Verfahren in einem Kommunikationssystem für eine Übersetzung von an einen gerufenen Teilnehmer gerichtete Nachrichten in eine von diesem abhängige Landessprache,
wobei für interne Teilnehmer in dem Kommunikationssystem (KS) jeweils eine, eine dem betreffenden Teilnehmer zugeordnete Landessprache bezeichnende Selektorinformation (SI), gespeichert wird,
und bei einem Aufbau einer Verbindung die Selektorinformation (SI-A) des rufenden Teilnehmers mit der Selektorinformation (SI-B) des gerufenen Teilnehmers verglichen wird,
und daß bei unterschiedlichen Selektorinformationen (SI-A, SI-B) automatisch eine Einschleiffunktion aktiviert wird, die ein Zwischenschalten einer Übersetzungseinrichtung (TRSS, TRTT) in die Verbindung bewirkt.

2. Verfahren nach Anspruch 1,
**dadurch gekennzeichnet,**
**daß** in dem Kommunikationssystem (KS) in mehreren Sprachen Anzeigetexte für eine Dialog-Bedienoberfläche interner Endgeräte (EG) gespeichert sind.

3. Verfahren nach Anspruch 2,
**dadurch gekennzeichnet,**
**daß** die Selektorinformation, abhängig von der von einem Teilnehmer gewählten Landessprache der Anzeigetexte für die Dialog-Bedienoberfläche gebildet wird.

4. Verfahren nach einem der vorangegangenen Ansprüche,
**dadurch gekennzeichnet,**
**daß** in Fällen, in denen ein rufendes Endgerät (EG-A) und ein gerufenes Endgerät (EG-B) unterschiedlichen Kommunikationssystemen (KS-A, KS-B) zugeordnet sind, die Selektorinformation (SI-A) vom Kommunikationssystem (KS-A) des rufenden Endgerätes (EG-A), zu dem des gerufenen Endgerätes (EG-B) und/oder die Selektorinformation (SI-B) vom Kommunikationssystem (KS-B) des gerufenen Endgerätes (EG-B), zu dem des rufenden Endgerätes (EG-A) übermittelt wird.

5. Verfahren nach Anspruch 4,
**dadurch gekennzeichnet,**
**daß** die Übermittlung der Selektorinformation (SI-A, SI-B) im Rahmen einer Rufsignalisierung (SETUP), insbesondere einer ISDN-Rufsignalisierung vorgenommen wird.

6. Verfahren nach einem der vorangegangenen Ansprüche,
**dadurch gekennzeichnet,**
**daß** die Einschleiffunktion deaktivierbar ist.

7. Verfahren nach einem der vorangegangenen Ansprüche,
**dadurch gekennzeichnet,**
**daß** die zu übersetzende Nachricht eine Sprach-Nachricht (Voice), eine Facsimile-Nachricht (Fax), eine Video-Nachricht oder eine Nachricht für elektronische Post (E-Mail) ist.

8. Anordnung in einem Kommunikationssystem für eine Übersetzung von an einen gerufenen Teilnehmer gerichtete Nachrichten in eine von diesem abhängige Landessprache,
mit einem Textspeicher (ROM), in dem in mehreren Sprachen Anzeigetexte für eine Display-Bedienoberfläche von internen Endgeräten (EG) gespeichert sind,
und mit teilnehmeranschlußindividuellen Speicherelementen, in denen jeweils eine für den Teilnehmeranschluß gewählte Landessprache identifizierende Selektorinformation (SI) gespeichert ist,
und mit mindestens einer Übersetzungseinrichtung (TRSS) für eine Übersetzung von gesprochener Sprache und/oder mindestens einer Übersetzungseinrichtung (TRTT) für eine Übersetzung von Text,
und mit einem Steuerwerk (CC) zur Steuerung einer Einschleiffunktion, die ein Zwischenschalten einer Übersetzungseinrichtung (TRSS, TRTT) in eine Verbindung zwischen dem gerufenen und einem rufenden Teilnehmer in den Fällen bewirkt, in denen die dem gerufenen Teilnehmer zugeordnete Selektorinformation (SI) ungleich einer über die Verbindung übermittelten, dem rufenden Teilnehmer zugeordneten Selektorinformation (SI ist.

## Claims

1. Method in a communication system for translating messages intended for a called subscriber into a natural language which is dependent on said subscriber, in each case a selector information item (SI) which designates a natural language assigned to the respective subscriber being stored for internal subscribers in the communication system (KS), and when a connection is set up the selector information item (SI-A) of the calling subscriber being compared with the selector information item (SI-B) of the called subscriber, and, when there are different selector information items (SI-A, SI-B), a connection function being automatically activated which causes a translation device (TRSS, TRTT) to be switched into the connection.

2. Method according to Claim 1, **characterized in that** display texts for a dialogue operator interface of internal terminals (EG) are stored in a plurality of languages in the communication system (KS).

3. Method according to Claim 2, **characterized in that** the selector information is formed as a function of the natural language, selected by a subscriber, of the display texts for the dialogue operator interface.

4. Method according to one of the preceding claims, **characterized in that** in cases in which a calling terminal (EG-A) and a called terminal (EG-B) are assigned to different communication systems (KS-A, KS-B), the selector information (SI-A) is transferred from the communication system (KS-A) of the calling terminal (EG-A) to that of the called terminal (EG-B) and/or the selector information (SI-B) is transferred from the communication system (KS-B) of the called terminal (EG-B) to that of the calling terminal (EG-A).

5. Method according to Claim 4, **characterized in that** the selector information (SI-A, SI-B) is transferred within the scope of a call signalling operation (SETUP), in particular an ISDN call signalling operation.

6. Method according to one of the preceding claims, **characterized in that** the connection function can be deactivated.

7. Method according to one of the preceding claims, **characterized in that** the message to be translated is a voice message (Voice), a facsimile message (Fax), a video message or a message for electronic mail (e-mail).

8. Arrangement in a communication system for translating messages intended for a called subscriber into a natural language which is dependent on said subscriber, having a text memory (ROM) in which display texts for a display operator interface of internal terminals (EG) are stored in a plurality of languages, and having subscriber-line-specific storage elements in which in each case a selector information item (SI) which identifies a natural language which is selected for the subscriber line is stored, and having at least one translation device (TRSS) for translating spoken language and/or at least one translation device (TRTT) for translating text, and having a control unit (CC) for controlling a connection function which switches a translation device (TRSS, TRTT) into a connection between the called subscriber and a calling subscriber in the cases in which the selector information (SI) which is assigned to the called subscriber is unequal to a selector information item (SI) which is transferred via the connection and is assigned to the calling subscriber.

## Revendications

1. Procédé dans un système de communication pour une traduction de messages adressés à un abonné appelé dans une langue nationale dépendant de celui-ci,
une information de sélecteur (SI) désignant une langue nationale associée à l'abonné concerné étant mémorisée, à chaque fois, dans le système de communication (KS) pour les abonnés internes,
et l'information de sélecteur (SI-A) de l'abonné appelant étant comparée, lors de l'établissement d'une communication, à l'information de sélecteur (SI-B) de l'abonné appelé,
et une fonction d'insertion étant automatiquement activée, en cas de différence entre les informations de sélecteur (SI-A, SI-B), laquelle fonction provoque l'intercalage d'un dispositif de traduction (TRSS, TRTT) dans la communication.

2. Procédé selon la revendication 1, **caractérisé en ce que** des textes d'affichage pour un pupitre de commande de dialogue de terminaux internes (EG) sont mémorisés en plusieurs langues dans le système de communication (KS).

3. Procédé selon la revendication 2, **caractérisé en ce que** l'information de sélecteur est formée en fonction de la langue nationale, sélectionnée par un abonné, des textes d'affichage pour le pupitre de commande de dialogue.

4. Procédé selon l'une des revendications précédentes, **caractérisé en ce que**, dans les cas où un terminal appelant (EG-A) et un terminal appelé (EG-B) sont associés à des systèmes de communication (KS-A, KS-B) différents, l'information de sélecteur (SI-A) est transmise du système de communication (KS-A) du terminal appelant (EG-A) vers celui du terminal appelé (EG-B) et/ou l'information de sélecteur (SI-B) est transmise du système de communication (KS-B) du terminal appelé (EG-B) vers celui du terminal appelant (EG-A).

5. Procédé selon la revendication 4, **caractérisé en ce que** la transmission de l'information de sélecteur (SI-A, SI-B) s'effectue dans le cadre d'une signalisation d'appel (SETUP), notamment d'une signalisation d'appel ISDN.

6. Procédé selon l'une des revendications précédentes, **caractérisé en ce que** la fonction d'insertion peut être désactivée.

7. Procédé selon l'une des revendications précédentes, **caractérisé en ce que** le message à traduire est un message vocal (*voice*), un message de télécopie (fax), un message vidéo ou un message pour le courrier électronique (*e-mail*).

8. Dispositif dans un système de communication pour une traduction de messages adressés à un abonné appelé dans une langue nationale dépendant de celui-ci,
comprenant une mémoire textuelle (ROM) dans laquelle des textes d'affichage pour un pupitre de commande à affichage de terminaux internes (EG) sont mémorisés en plusieurs langues,
et des éléments de mémoire individuels pour chaque connexion d'abonné, dans lesquels, à chaque fois, une information de sélecteur (SI) identifiant une langue nationale sélectionnée pour la connexion d'abonné est mémorisée,
et au moins un dispositif de traduction (TRSS) pour une traduction de la langue parlée et/ou au moins un dispositif de traduction (TRTT) pour une traduction de texte,
et une unité de commande (CC) pour commander une fonction d'insertion qui provoque l'intercalage d'un dispositif de traduction (TRSS, TRTT) dans une communication entre l'abonné appelé et un abonné appelant dans les cas où l'information de sélecteur (SI) associée à l'abonné appelé n'est pas identique à une information de sélecteur (SI) associée à l'abonné appelant, qui est transmise par le biais de la communication.
